# EUROPEAN PATENT APPLICATION

(11) **EP 4 198 560 A1**
(43) Date of publication of application: **21.06.2023**
(21) Application number: 21215345.6
(22) Date of filing: 17.12.2021
(51) Int. Cl.: G01S 13/00, G01S 13/46, G01S 13/86, G01S 13/87, G01S 7/00, H04W 64/00, G01S 13/931

(54) **WIRELESS COMMUNICATION SYSTEM WITH DISTRIBUTED SENSING CAPABILITY**

(71) Applicant: Koninklijke Philips N.V., 5656 AG Eindhoven (NL)
(72) Inventor: WALKER, Nicholas, Eindhoven (NL); BEARD, Timothy, Eindhoven (NL); GARCIA MORCHON, Oscar, Eindhoven (NL); DEES, Walter, Eindhoven (NL)
(74) Representative: Philips Intellectual Property & Standards

(57) **Abstract**

Systems and methods for providing sensing capability in a wireless communication system, wherein a part of the communication spectrum is configured for a period of time to enable performing sensing by establishing a distributed sensing system between a base station (100) or terminal device as transmitter device and a terminal device or base station (120) as receiver device in such a way that the lack of analogue signal exchange and the additional path length caused by the transmitter-receiver distance and the receiver-target distance are corrected for, while parameters that need to be communicated are configured for the application required.

## Description

### FIELD OF THE INVENTION

The invention relates to the field of communication between terminal devices and/or fixed or mobile access devices in wireless networks, such as - but not limited to - fifth generation (5G) cellular communication systems.

### BACKGROUND OF THE INVENTION

As the wavelength of communication systems decreases, the ability to use the same wavebands for increasingly precise sensing applications improves.

So-called 'mmWave' radar is a contactless sensing technology for detecting objects and providing range, velocity and angle of these objects and operates in a spectrum between 30GHz and 300GHz. Due to the technology's use of small wavelengths, it can provide sub-mm range accuracy and is able to penetrate certain materials such as plastic, drywall, clothing, and is relatively impervious to environmental conditions such as rain, fog, dust and snow. The ability to sense surface positions and movements at sub-mm scale enables such systems to perform vital signs monitoring.

As an example, signal wavebands of 5G communication systems or other suitable wireless communication systems can be used as mmWave radar e.g. to measure locations and movements of cars and people and even vital sign signals such as heart rate and breathing rate, but this requires knowledge of the transmission environment, approximate target location, and suitable modifications to the signaling system.

However, radar systems or other sensing systems are usually implemented as single non-distributed systems comprising a transmitter and a receiver to enable communication of analogue signals and timing. Therefore, a duplication of equivalent system elements and other substantial modifications of communication system hardware are required to achieve adequate sensing capability.

### SUMMARY OF THE INVENTION

It is an object of the present invention to provide sensing capability for communication systems while minimizing modification requirements.

This object is achieved by an apparatus as claimed in claim 1, by a wireless communication device as claimed in claim 14, by a system as claimed in claim 15, by a method as claimed in claim 23, and by a computer program product as claimed in claim 24.

According to a first aspect related to a wireless communication device (e.g., access device or terminal device) at a receiver side of a distributed sensing function, an apparatus is provided for providing radar sensing capability in the wireless communication device, the apparatus comprising:
a wireless communication unit for receiving a communication signal from a remote wireless communication device at another communication end;
a reception frontend for receiving radio frequency signals;
a detection unit for detecting a sensing signal at the output of the reception frontend based on sensing parameter information included in the received communication signal;
an analysis system configured to perform based on the received sensing signal and the sensing parameter information included in the received communication signal at least one of:
   determining a timing, phase shift, frequency, amplitude or signal deformation of the sensing signal to further determine if the sensing signal is reflected by a target object or is sent via a direct non-reflected path;
   generating a filtered signal to transmit to a further processing unit to extract sensing information about a target object; and
   determining a position, a movement or a structure of a target object.

According to a second aspect related to the wireless communication device (e.g., access device or terminal device) at the receiver side of the distributed sensing function, a method is provided for providing sensing capability in a wireless communication device, the method comprising:
receiving a communication signal from a remote device at another communication end; detecting a sensing signal at the output of a radio frequency reception frontend based on sensing parameter information included in the received communication signal;
performing based on the received sensing signal and the sensing parameter information included in the received communication signal at least one of:
   determining a timing, phase shift, frequency, amplitude or signal deformation of the sensing signal to further determine if the sensing signal is reflected by a target object or is sent via a direct non-reflected path;
   generating a filtered signal to transmit to a further processing unit to extract sensing information about a target object; and
   determining a position, a movement or a structure of a target object.

According to a third aspect, a wireless communication device comprising an apparatus of the first aspect is provided.

According to a fourth aspect, a system is provided, which comprises at least one wireless communication device according to the third aspect and at least one remote wireless communication device for transmitting the received sensing signal.

Finally, according to a fifth aspect, a computer program product is provided, which comprises code means for producing the steps of the method of the second aspect when run on a processor of a wireless communication device.

Accordingly, the invention enables a flexible method for terminal devices (e.g., UEs, sensors, etc.) or access devices (e.g., base stations, access points, etc.) to request a period of sensing directed at a suggested target object for a suggested time period, using only moderate modifications of the components of the communication system. This allows handset-directed sensing by a sensing function (e.g., a radar sensing function, a CSI-based sensing function, etc.) integrated with standard or conventional communication systems, in which spatial receiver-to-target and receiver-to-transmitter separations are accounted for and without an analogue emitted signal required at the receiver handset.

Thereby, vital signs (e.g., heart rate, breathing rate, etc.) of a selected individual or multiple individuals (e.g., human beings or animals) or position and movements of a target object or multiple target objects can be measured. Moreover, if vital signs are measured from a target object, this information can be used for discriminating an individual person from an object.

Furthermore, the proposed integrated sensing function can be used for measuring skin permittivity (at a defined radio frequency) of a surface, which can be used as a measure of e.g. stress (e.g. over time).

According to a first option which may be combined with any of the above first to fifth aspects, wherein the received signal may be a radar signal, or a chirp signal, or a training symbol of a channel state information. Thereby, various sensing options for implementing the distributed sensing system can be provided.

According to a second option which may be combined with the first option or any of the above first to fifth aspects, the wireless communication unit of the wireless communication device may be used to transmit a sensing measurement request to the remote wireless communication device in order to receive at least one of the sensing parameter information or resource allocation information for sensing. Thereby, a distributed radar sensing operation or a semi-persistent scheduling in a sensing mode can be initiated at the remote wireless communication device (transmitter of the distributed sensing system) via a standard communication link. This can be done in a secure manner by using e.g. RRC signaling. According to a third option which may be combined with the first or second option or any of the above first to fifth aspects, the wireless communication unit of the wireless communication device may be used to transmit at least one of a required scan time for sensing measurement and a rough indication of a direction and range to the target object to the remote wireless communication device. Thereby, the wireless communication unit at the remote wireless communication device (transmitter of the distributed radar system) can initiate a preparatory set-up of its distributed sensing function and antenna beamforming according to the received information.

According to a fourth option which can be combined with any of the first to third options or any of the above first to fifth aspects, the sensing parameter information may comprise at least one of timing, phase and frequency information, an identification of an algorithm or filter to be used for processing, an application identifier, and a sensing signal identifier of the received sensing signal. This preparatory information allows the communication unit of the wireless communication device (receiver of the distributed sensing system) to generate by means of its communication unit a proper synthetic sensing signal that matches with the real sensing signal generated at the remote wireless communication device (transmitter of the distributed sensing system).

According to a fifth option which can be combined with any of the first to fourth options or any of the above first to fifth aspects, a signal generator may be provided for generating based on the sensing parameter information included in the received communication signal an internal synthetic sensing signal, wherein the analysis system is configured to combine the synthetic sensing signal with the received sensing signal. Thereby, a joint transmitter and receiver sensing system ("non-distributed" sensing system) can be provided for measuring desired parameters of the received sensing signal, or a system can be provided whereby the transmitter and receiver are physically distributed, but which together operate equivalently to a non-distributed sensing system and/or a system in which the receiver reuses components/subsystems of a non-distributed sensing system.

According to a sixth option which can be combined with any of the first to fifth options or any of the above first to fifth aspects, the signal generator may be configured to use a discrete Fourier transform spread orthogonal frequency division multiplexing signal generation process of the wireless communication unit to generate a chirp signal as the internal synthetic sensing signal matching the received sensing parameter information. This measure provides the advantage that an available signal generation process of the communication unit at the receiver of the distributed sensing system can be adapted to generate a synthetic sensing signal for a non-distributed sensing receiver function without requiring substantial modifications.

According to a seventh option which can be combined with any of the first to sixth options or any of the above first to fifth aspects, the analysis system may be configured to generate an intermediate frequency signal by combining the internal synthetic sensing signal with the received sensing signal, to perform filtering and analogue-to-digital conversion of the intermediate frequency signal to obtain a digital intermediate frequency signal, and to process the digital intermediate frequency signal to yield application-specific position, movement or structure data or to transmit the digital intermediate frequency signal to the remote wireless communication device or a network function/device or a cloud to perform further application-specific processing. Thus, available components of the communication unit of the wireless communication device at the receiver side of the distributed sensing system can be used to implement a non-distributed analysis system without requiring substantial modifications.

According to an eighth option which can be combined with any of the first to seventh options or any of the above first to fifth aspects, a time delay measurement functionality may be provided by using the wireless communication unit to perform a two-way time delay measurement in cooperation with the remote wireless communication device. Thereby, delay compensation of a distributed sensing system can be achieved without substantial modifications of the communication devices.

According to a ninth option which can be combined with any of the first to eighth options or any of the above first to fifth aspects, at least one movement sensor for measuring movements and/or vibrations of the wireless communication device may be provided. Thus, movements and/or vibrations at the receiver side of the distributed sensing system can be compensated for.

According to a tenth option which can be combined with any of the first to ninth options or any of the above first to fifth aspects, a lower-resolution non-distributed analysis system may be provided at the receiver side of the distributed radar system to provide a non-distributed location scanning capability. This additional non-distributed analysis system can be used to perform a preparatory scanning operation for obtaining a rough location of the target object.

According to an eleventh option which can be combined with any of the first to tenth options or any of the above first to fifth aspects, the analysis system may be configured to detect a location and/or movement of the target object based on an isolated surface derived from a constant line detected in the digital intermediate frequency signal, orto detect a heart rate and breathing rate based on isolated and unwrapped phase data of a selected surface derived from a constant line detected in the digital intermediate frequency signal, or to measure a skin conductivity based on an estimation of a total reflectivity of a selected surface derived from a constant line detected in the digital intermediate frequency signal. Thus, various sensing or measuring applications can be added to wireless communication devices without requiring substantial modifications.

According to a twelfth option which can be combined with any of the first to eleventh options or any of the above first to fifth aspects, the analysis system may be configured to detect a unique spatial location of a surface of the target object by finding intersections of equal-distance return ellipses or circles of receiver devices of the sensing signal and constraining the position by a direction angle and beam spread angle of a transmitter beam of the remote wireless communication device. Thereby, a unique location of the target object can be obtained by using distributed receivers of the distributed sensing system.

According to a thirteenth option which can be combined with any of the first to twelfth options or any of the above first to fifth aspects, the remote wireless communication device (transmitter of the distributed radar system) may be configured to determine if it can respond to a sensing measurement request received from the wireless communication device and respond with a sensing session confirmation or a sensing session denial message based on the determination result. Thereby, a temporary on-demand sensing function can be established in a wireless communication system.

According to fourteenth option which can be combined with any of the first to thirteenth options or any of the above first to fifth aspects, the remote wireless communication device (transmitter of the distributed radar system) may be configured to determine the sensing parameter information including parameters of at least one of a signal to be used as the sensing signal, a rough position of the target object and a position offset from the remote wireless communication device to the wireless communication device and to communicate the sensing parameter information along with a future time for a first sensing signal or a future schedule for the sensing signal to the wireless communication device. Thereby, the wireless communication unit at the receiver side of the distributed sensing system can be adapted to the sensing signal and target object for achieving a matched sensing receiver function. Use of the future schedule allows that the remote device assigns a semi-persistent schedule. This is useful, e.g., for vital sign monitoring.

According to a fifteenth option which can be combined with any of the first to fourteenth options or any of the above first to fifth aspects, the remote wireless communication device (transmitter of the distributed sensing system) may be configured to transmit the sensing signal at the communicated future time by using a discrete Fourier transform spread orthogonal frequency division multiplexing signal generation process of a wireless communication unit to generate the sensing signal by converting a single-carrier nature of the discrete Fourier transform spread orthogonal frequency division multiplexing signal to a linear combination of chirp signals circularly translated in the time domain. Thus, an available signal generation process of the communication unit can be used for generating the sensing signal used in the distributed sensing system.

According to a sixteenth option which can be combined with any of the first to fifteenth options or any of the above first to fifth aspects, the remote wireless communication device (transmitter of the distributed sensing system) may be configured to determine a target angle and a distance to the target object by using a location estimation sensing operation of a non-distributed sensing system provided at the remote wireless communication device. Thereby, an estimation of the angle and distance of the target object can be obtained at the transmitter side of the distributed sensing system and communicated to the receiver side for preparatory beamforming.

According to a seventeenth option which can be combined with any of the first to sixteenth options or any of the above first to fifth aspects, the remote wireless communication device (transmitter of the distributed sensing system) may be configured to use a wireless communication unit to perform a two-way time delay measurement in cooperation with the wireless communication device (receiver of the distributed sensing system). Thereby, a delay compensation of the sensing result can be achieved without substantive modifications by using the available wireless communication units.

According to an eighteenth option which can be combined with any of the first to seventeenth options or any of the above first to fifth aspects, a clock-level synchronization between the remote wireless communication device (transmitter of the distributed sensing system) and the wireless communication device (receiver of the distributed sensing system) may be achieved by a time synchronization and delay compensation measurement process using wireless communication signals. Thereby, a proper timing of the generated internal synthetic sensing signal can be ensured.

According to a nineteenth option which can be combined with any of the first to eighteenth options or any of the above first to fifth aspects, the wireless communication device (receiver of the distributed sensing system) may be configured to transmit to the remote wireless communication device (transmitter of the distributed sensing system) a resource scheduling message requesting scheduling of sensing session resources, and the remote wireless communication device may reply to the wireless communication device with a downlink control information message including the allocated resources, e.g., a secure RRC message. Thereby, the temporary on-demand sensing function can be scheduled without substantial modifications by using an available resource scheduling process of the wireless communication devices.

It is noted that the above apparatus may be implemented based on discrete hardware circuitries with discrete hardware components, integrated chips, or arrangements of chip modules, or based on signal processing devices or chips controlled by software routines or programs stored in memories, written on a computer readable media, or downloaded from a network, such as the Internet.

It shall be understood that the apparatus of claim 1, the wireless communication device, the system of claim 14, the method of claim 15, and the computer program product may have similar and/or identical preferred embodiments, in particular, as defined in the dependent claims.

It shall be understood that a preferred embodiment of the invention can also be any combination of the dependent claims or above embodiments with the respective independent claim.

These and other aspects of the invention will be apparent from and elucidated with reference to the embodiments described hereinafter.

### BRIEF DESCRIPTION OF THE DRAWINGS

In the following drawings:
Fig. 1 schematically shows a communication system with distributed radar function according to an embodiment;
Fig. 2 schematically shows a transmitter and receiver architecture according to various embodiments;
Fig. 3 schematically shows a process flow diagram for radar sensing in a communication system according to an embodiment;
Fig. 4 schematically shows a flow diagram of a radar sensing operation according to an embodiment;
Fig. 5 schematically shows a flow diagram of a location and movement detection process according to an embodiment;
Fig. 6 schematically shows a flow diagram of a heart rate and breathing rate detection process according to an embodiment;
Fig. 7 schematically shows a flow diagram of a skin conductivity measurement process according to an embodiment;
Fig. 8 schematically shows a signaling and processing diagram of a radar sensing process in a multi-receiver system according to an embodiment;
Fig. 9 schematically shows an example of an improved position location estimation with one transmitter device and two receiver devices according to an embodiment; and
Fig. 10 schematically shows an example of an improved position location estimation with one receiver device and one transmitter device that also operates as a receiver revice, according to an embodiment.

### DETAILED DESCRIPTION OF EMBODIMENTS

Embodiments of the present invention are now described based on a cellular communication network environment, such as 5G.

Throughout the present disclosure, the abbreviation "gNB" (5G terminology) or "BS" (base station) is intended to mean a wireless access device such as a cellular base station or a WiFi access point. The gNB may consist of a centralized control plane unit (gNB-CU-CP), multiple centralized user plane units (gNB-CU-UPs) and/or multiple distributed units (gNB-DUs). The gNB is part of a radio access network (RAN), which provides an interface to functions in the core network (CN). The RAN is part of a wireless communication network. It implements a radio access technology (RAT). Conceptually, it resides between a communication device such as a mobile phone, a computer, or any remotely controlled machine and provides connection with its CN. The CN is the communication network's core part, which offers numerous services to customers who are interconnected via the RAN. More specifically, it directs communication streams over the communication network and possibly other networks.

Furthermore, the terms "base station" (BS) and "network" may be used as synonyms in this disclosure. This means for example that when it is written that the "network" performs a certain operation it may be performed by a CN function of a cellular network, or by a specific base station that is part of such cellular network, and vice versa. It can also mean that part of the functionality is performed by the cellular network and part of the functionality by the base station.

Moreover, the term "radar sensing" is intended to cover not only techniques whereby a single device both sends and receives a radar signal, but also distributed RF based sensing techniques, such as techniques whereby the sensing signal is received by multiple devices in a distributed manner or techniques that are based on sensing of a channel state information (CSI) in a CSI-based distributed sensing solution and/or based on other types measurement information related to RF signals (e.g. MIMO sounding signal feedback, doppler phase shift measurements).

It is noted that throughout the present disclosure only those blocks, components and/or devices that are relevant for the proposed data distribution function are shown in the accompanying drawings. Other blocks have been omitted for reasons of brevity. Furthermore, blocks designated by same reference numbers are intended to have the same or at least a similar function, so that their function is not described again later.

The following embodiments allow for implementation of a radar functionality in wireless communication involving one or more access devices (e.g., base stations (BS)) and one or more terminal devices (e.g., UEs).

As an example, Frequency Modulated Continuous Wave (FMCW) mmWave radar systems can measure range, velocity, and angle of arrival (if two receivers are available) of objects in the scene which reflect radio waves. Such radar systems emit a chirp signal, e.g., a sine wave that increases in frequency over time. The chirp signal (e.g., a continuous wave pulse) has a bandwidth and a frequency increase rate. Generally, a continuous series of such chirps are emitted. The transmitted and received analogue chirp signals are mixed to generate an intermediate frequency (IF) signal which corresponds to the difference in frequencies of the two signals (outbound and inbound) and whose output phase corresponds to the difference in the phases of the two signals.

Each surface of a scene or environment will therefore produce a constant frequency IF signal whose frequency relates to the distance to the surface (i.e., a first distance from the transmitter of the chirp signal to the surface plus a second distance from the surface to the receiver of the chirp signal). To resolve two surfaces at different distances, the two IF signals can be frequency resolved. A longer time window of the IF signal results in greater resolution. As the chirp time is related to its bandwidth (with constant chirp frequency change) the resolution of the radar is related to the chirp bandwidth. The IF signal may then be band pass filtered (to remove signals below some minimal range and frequencies above the maximum frequency for a subsequent analogue-to-digital converter (ADC)) and digitized prior to further processing. The upper frequency sensing range of the bandpass filter and ADC sets the maximum range that can be detected (i.e., IF frequencies increase with range).

To detect vibrations, the phase of the IF signal is important, since the phase (i.e., the difference in phases of the transmitted and received chirp signals) is a sensitive measure of small changes in the distance of a surface. Small distance changes can be detected in the phase signal but may be indiscernible in the frequency signal. Moreover, phase difference measures between two consecutive chirp signals can be used to determine the velocity of the surface.

As an example, a fast Fourier transform (FFT) processing can be performed across multiple chirp signals to enable separation of objects with the same range but moving at different velocities. A Fourier transform converts a signal from a space or time domain into the frequency domain. In the frequency domain the signal is represented by a weighted sum of sine and cosine waves. A discrete digital signal with N samples can be represented exactly by a sum of N waves. FFT provides a faster way of computing a discrete Fourier transform by using the symmetry and repetition of waves to combine samples and reuse partial results. This method can save a huge amount of processing time, especially with real-world signals that can have many thousands or even millions of samples.

As a further example, angle estimation can be performed by using the phase difference between the received chirp signal at two separated receivers.

As another option, a channel state information (CSI) can be used, which is a measure of the phases and amplitudes of many frequencies detected at a receiver, thereby forming a complex 'map' of the radio environment, including effects of objects within that environment. CSI characterizes how wireless signals propagate from the transmitter to the receiver at certain carrier frequencies. CSI amplitude and phase are impacted by multi-path effects including amplitude attenuation and phase shift, e.g., by the displacements and movements of the transmitter, receiver, and surrounding objects and humans. In other words, CSI captures the wireless characteristics of the nearby environment. These characteristics, assisted by mathematical modeling or machine learning algorithms, can be used for different sensing applications.

A radio channel may be divided into multiple subcarriers -as is done e.g. in 5G communication systems (using e.g. orthogonal frequency division modulation (OFDM)). To measure CSI, the transmitter may send long training symbols (LTFs), which contain pre-defined symbols for each subcarrier, e.g., in a packet preamble. When those LTFs are received, the receiver can estimate a CSI matrix using the received signals and the original LTFs. For each subcarrier, the channel can be modeled by ***y*** = *H**x*** + ***n***, where ***y*** is the received signal, ***x*** is the transmitted signal, *H* is the CSI matrix, and ***n*** is the noise vector. The receiver estimates the CSI matrix *H* using a pre-defined signal ***x*** and the received signal ***y*** after signal processing such as removing cyclic prefix, de-mapping and demodulation. The estimated CSI is then a three-dimensional matrix of complex values and this matrix represents an 'image' of the radio environment at that time. By processing a time series of such 'images' information on movements, locations and vibrations of objects can be extracted.

Such a processing of a CSI matrix can be used for vital signs monitoring, presence detection, and human movement recognition. As an example, neural network like recognition techniques can be used to process the CSI matrix to perform such kinds of recognition.

It is noted that systems using channel state information (CSI) are somehow related to systems with FMCW mmWave radar. In a CSI-based system, the input signal ***x*** may be defined and the receiver may use the received signal ***y*** to obtain ***H**,* i.e., as ***H = (Y-N)*/*X*** . In a FMCW mmWave radar, the transmitted signal Chirp ***x*** might also be predefined, and the receiver may uses the received signal ***y*** to obtain a transfer function as ***H*** = ***Y*/*****X**.* This last step is in fact somehow related to multiplying the locally computed chirp signal and the received chirp signal and applying a bandpass filter. According to various embodiments described below, the above described wireless sensing techniques are implemented in a mobile communication system (e.g. 5G or other cellular or WiFi communication systems), while the functional coexistence of radar and communication operating in the same frequency bands is configured to avoid interference bandwidths. Thereby, radio sensing can be integrated into large-scale mobile networks to create perceptive mobile networks (PMNs).

As another example, the sensing signal might consist of a number of pulses sent, e.g., at specific frequencies and timing (sensing signal parameter information) by a sensing transmitter. The sensing receiver might include a number of bandpass filters that allow identifying the sensing signal parameter information, e.g, timing and frequency of the received pulses. In particular, if the transmitter determines a given pseudo-random sequence of frequency/timing pulses and beams it, e.g., by means of beamforming, in a specific direction, and if the transmitter communicates to the receiver the timing/frequency, in general, the sensing signal parameter information, of the transmitted sensing signal, the receiver can use its bandpass filters to identify the reception of the same transmitted pulses, i.e., sensing signal, based on the received sensing signal parameter information.

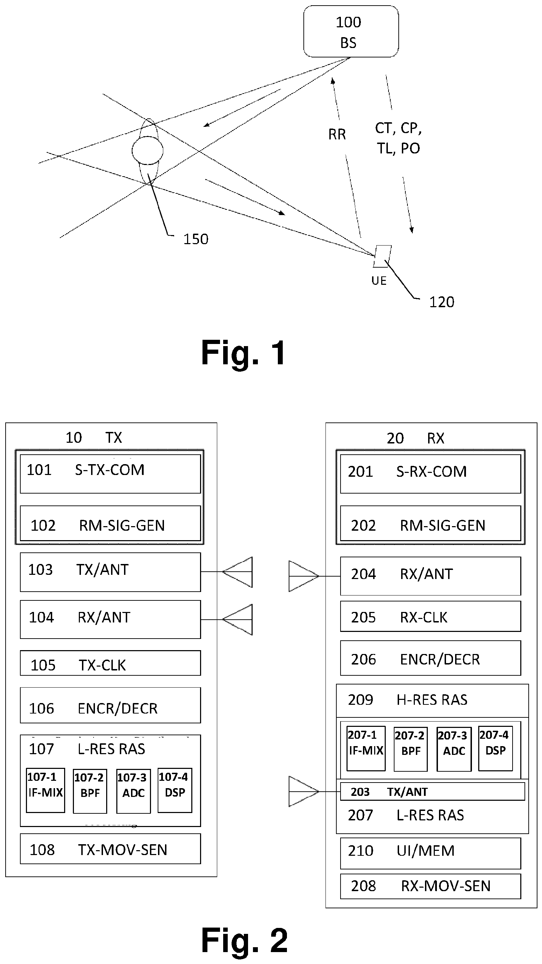

Fig. 1 schematically shows a distributed radar function created via a 5G communication system link according to an embodiment.

In distinction to a purely centralized mmWave radar solution, a part of the 5G (or other cellular or WiFi) network spectrum is configured (e.g., set into a radar mode) for a period of time to enable performing, e.g., remote vital signs and other measurements by construction of a distributed radar system between a 5G base station (BS) 100 or UE (as transmitter) and at least one 5G UE 120 or base station (as receiver), while the lack of analogue signal exchange and the additional path length caused by the transmitter-receiver distance and the distance between the receiver (e.g. UE 120) and a target (e.g., human being) is corrected for. The parameters (e.g., distance and angle from transmitter to receiver, pulse origination time, pulse phase, frequencies, possibly including chirp timing (CT), chirp profile (CP), target location (TL), phase offset (PO), time between subsequent sensing signals, sensing signal waveform information, amplitudes, MIMO/beamforming parameters, number of transmitter antennas used, transmit power, potential interference patterns etc.) that may be communicated in response to a request for radar (RR) from the receiver side (e.g., UE 120), or may be sent to the receiver side by the transmitter side before the transmitter will start sending sensing signals (e.g., as part of a configuration/auxiliary information message/signal), or may be (partially) pre-configured on the receiver (e.g. stored in USIM or stored in a nonvolatile memory at manufacturing time), or may be configured on the receiver by means of a local application, or may be provided by the network (possibly via the transmitter or via another transmitter) as part of policy/system information/RRC configuration/session configuration (e.g. upon initial registration or connection setup of the receiver to the network or a previous initial registration/connection setup). The parameters may be configured differently per application (e.g., based on the sensing target or based on the sensing algorithm). A set of parameters may be combined in the form of a sensing profile that may be identifiable e.g. by means of a profile identifier or application identifier or device identifier. After a sensing profile is sent/configured/pre-configured on a receiver, the activation of a sensing profile may be triggered by sending a signal/message to the receiver with an indicated sensing profile identifier. The sensing profile may also include an algorithm identifier, filter identifier or machinelearning model identifier to trigger the application of respectively a specific sensing algorithm, a filter or a machine learning model to use for analysing/processing the received sensing signals. These algorithms, filters or models may be pre-configured/stored at the receiver beforehand, or transmitted by the transmitter to the receiver (e.g. as virtual machine code, filter parameters/code or model data), for example in a separate message, or may be downloaded (e.g. as virtual machine code, filter parameters/code or model data) by the receiver based on e.g. a download URL or IP address of a server, may be configured for the application required. For example, if a precise range is required, the full set of parameters is communicated, while if a phase-based velocity is required, only chirp parameters may be required. In some applications, the chirp parameters might be predefined and only an identifier indicating the set of chirp parameters might be exchanged. The parameters may also include a set of time/frequency resources (e.g., a semi-persistent schedule as defined in 3GPP TS 38.321) and/or time/frequency offsets in which the sensing signals are planned to be transmitted and/or when these are expected to arrive at the receiver. This information may also be provided as a time interval in which the receiver is expected to listen to incoming reflected sensing signals (e.g., as an offset to a start time or system frame number/subframe/symbol at which the signal will be transmitted by the transmitter). The start time, offset or time interval to perform the sensing by the receiver may be specified such that it starts at the start time or end time at which the first instance of the sensing signal is received by the receiver (i.e. the one received via a direct non-reflected path), i.e. reception of the first instance of the sensing signal can be used by the receiver to trigger/activate active sensing of the reflected signals. The parameters may also include information about quiet periods or guard intervals that may be taken into account by the receiver device. In addition, the parameters may include information about encoded identity information or special symbol/preamble or a unique signal characteristic that can enable the receiver to uniquely identity the respective sensing signal from possible other sensing or communication signals. In order for the receiver to be able to determine which parts of the sensing signal has encoded information in it, additional timing information may be provided to identify start/end times or a subdivision of time intervals within the time interval for receiving a complete single sensing signal, that indicates where in the sensing signal the receiver can find the encoded information.

In 5G systems, two options for an uplink (UL) waveform are provided. One is cyclic prefix OFDM (CP-OFDM, same as downlink (DL) waveform) and the other one is discrete Fourier transform spread OFDM (DFT-s-OFDM) which corresponds to the UL waveform in long term evolution (LTE) systems (i.e., 4G). Transform precoding is the first step to create the DFT-s-OFDM waveform, followed by sub-carrier mapping, inverse FFT and cyclic prefix (CP) insertion. Whether a UE needs to use CP-OFDM or DFT-s-OFDM is determined by a following radio resource control (RRC) parameter.

A 5G transmitter or receiver with integrated radar sensing capability may have slightly modified DFT-s-OFDM and frequency domain spectral shaping (FDSS) filters enabling them to generate suitable chirps. Linear and other chirp signals can be generated with DFT-s-OFDM signals via a well-designed FDSS filter enabling standard communication hardware with only minor modification to generate suitable signals for radar. Their framework offers a way to efficiently synthesize chirps that can be used in dual-function radar and communication (DFRC) or wireless sensing applications with existing DFT-s-OFDM transceivers.

Other options for generating a signal suitable for simultaneously performing data transmission and radar sensing are described in Cong Li et al.: "Radar Communication Integrated Waveform Design Based on OFDM and Circular Shift Sequence", Mathematical Problems in Engineering, Volume 2017 and are based on a peak-to-mean envelope power ratio (PMERP) and a peak-to-side-lobe ratio (PSLR) of OFDM waveforms. To be specific, a Gray code technology can be adopted to reduce the PMERP and simultaneously choose an optimal cyclic sequence to improve the PSLR of an OFDM waveform. The optimal cyclic sequence is dynamically generated to continuously provide the best waveform according to the change of communication data. In addition, to meet the requirements of different radar detection tasks, two simple methods can be utilized to adjust the bandwidth of the OFDM waveform. One method is to design different subcarrier complex weights and the other method is to utilize a phase code technique.

In Fig. 1, the base station 100 (and/or UE) determines the (rough) location of the target 150 and emits a series of signals, e.g., chirp signals, beamformed in the direction of the target 150. This may also be in the form of a relative position, e.g., a set of distances and/or angles relative to a reference point (e.g., the transmitter or the receiver).

Depending on the target sensing application, ahead of emitting a (chirp) signal, the precise timing of the phase and frequency (and optionally amplitude) of each individual (chirp) signal may be communicated (e.g., by using a protected standard communication signal) to the receiver (i.e., UE 120) optionally along with the location or relative position of the emitter (i.e., base station 100) and optionally rough location of the target 150. The idea of protected communication (encryption and/or integrity protection) is to make sure that only the target receiver can use this information. Based thereon, the receiver may optionally determine a path length and angle from the transmitter to the receiver and internally synthesize an analogue (chirp) signal matching the emitted (chirp) signal. Received and synthesized signals can be used for sensing purposes.

If the relative positions and exact times are known, the target surface can be reconstructed accurately, e.g., by detecting a correct intermediate frequency (IF) signal at a mixer output when the signal is a chirp signal. Knowing the phase and therefore phase difference, the velocity of the target 150 can be determined based on the frequency.

If only the velocity of the target 150 is required (as opposed to its position and velocity), the transmitter can optionally avoid providing its relative position and only communicate the phases, timing and frequency of emitted sensing signal. In certain cases, only the sensing signal itself may be transmitted to the receiver so that the receiver can use that sensing signal assuming a fixed time delay to compute the IF signal from which the velocity of the target can be derived. This might be of particular interest to measure vital signs such as breath or heart rate. For instance, it might allow to measure the speed of the breast when breathing and derive from it the breathing rhythm.

In further embodiments, given good enough reflecting surface location estimation, the receiver may enable further data to be collected, such as skin conductivity.

According to an embodiment, the radar sensing capability can be achieved by the following procedures.

Optionally, the target angle and distance and/or target shape and/or target material/reflectivity characteristic may be determined using a location estimation radar operation and/or target shape determination operation and/or target material/reflectivity characteristic determination operation at the transmitter (e.g., base station 100), unless it is already known.

The parameters of the sensing signals to be used in the transmitter sensing generation process, the rough location or relative position of the target and the position offset/angle from the transmitter to the receiver (e.g., UE 120) or the absolute/geographic location of the transmitter along with a future time for first (and subsequent) sensing signals are determined and communicated from the transmitter to the receiver by using e.g. a protected communication signal. Alternatively, some of the parameters may also be pre-configured at the receiver or may be configured at the receiver by means of a local application or may have been sent by the transmitter or the network at an earlier time (e.g., during a previous session).

Then, the communicated parameter information is (optionally) decrypted and/or verified by the receiver.

Thereafter, the transmitter emits sensing signals at the stated time by using e.g. its DFT-s-OFDM signal generation process to generate the sensing signal.

The receiver may use its DFT-s-OFDM signal generation process to generate an internal synthetic sensing signal (e.g. chirp) matching the parameters supplied, optionally with a delay corresponding to the direct distance from the transmitter to the receiver, thereby minimizing the IF frequency generated in the receiver. The receiver may use the supplied sensing parameter information and/orthe internal representation of the sensing signals to configure its RF reception frontend or signal detection unit to identify/detect the sensing signal amongst the signals received by the RF reception frontend. Upon detection and/or further processing of the received sensing signals, the receiver may determine and record/store start/end times, phase shifts, frequencies, amplitudes, signal deformations, signal strength, interference patterns, detected special symbols/preambles, encoded identity information of the sensing signals and/or timing of quiet periods between sensing signals. The receiver may use this information to further determine if the received sensing signals are actually reflected by a target object or have been received via a direct non-reflected path between the transmitter and the receiver, in order to filter out only the relevant sensing signals to extract sensing information about a target object.

The receiver may form an IF signal using (e.g., mixing) the internal synthetic 'emitted' sensing signal and the received sensing signal reflected at the target 150 and may performs band pass (or optionally only high pass filtering at the maximum frequency of the ADC) filtering and ADC to digitize the IF data and/or to digitize raw/filtered received reflected sensing signal data. To this end the receiver may create a compressed or uncompressed digitally sampled representation of the IF signal or the received raw/filtered reflected sensing signal(s), with a sampling frequency pre-configured at the receiver device, or a sampling frequency provided by the transmitter (e.g., as part of the sensing signal parameters). Also, information about which compression method/format to apply may be provided by the transmitter (e.g. as part of the sensing signal parameters) or pre-configured at the receiver. The digital IF signal may then be processed to yield application specific data (e.g., the output of one or more (pre-configured) algorithms or machine learning models), or the digitized data from the receiver can be transmitted to the transmitter or a network function/device a cloud to perform further application specific processing.

In addition to the processed or digitized data, the receiver may include identification information of the signal, sensing profile, algorithm/model, and/or the device, and may include timing and/or measurement information (e.g. arrival/end times, phase shifts, frequency, amplitude or signal deformations of the sensing signals) and/or antenna information/antenna sensitivity/MIMO configuration/beamforming configuration used by the receiver for sensing, and/or location/distance/angle related information of the receiver relative to the transmitter and/or the target, or as absolute coordinates.

The proposed distributed radar system between e.g. the base station 100 (as the transmitter) and the UE 120 (as the receiver and analyzer) provide the advantage that the receiver may be located more preferentially for obtaining the reflected signals at higher signal strength than the transmitter, for example it may be closer or more in the path of the reflected signal, and may avoid some of the clutter from the transmitted signal.

Moreover, a single antenna may not operate in full continuous duplex mode, while the proposed distributed radar system separates the transmitter antenna from the receiver antenna.

As a further advantage, multiple receivers can be used with a single transmitter, each possibly associated with collecting vital signs from a different target (e.g., individual human being).

Use of the receiver may be restricted to authorized individuals with permissions to e.g. read vital signs of a specific patient, so that patient security can be preserved.

According to an embodiment which may be combined with any other embodiment or implemented independently the transmitter and/or receiver receive information (e.g. from an application, network exposure function, policy control function, subscription database (e.g. home subscriber service, unified data management service), identity database, authentication/authorization control function, public safety answering point) information about one or more biometrics (e.g. heart rate signal characteristic, body shape, body absorption/reflectivity characteristic, body posture/movements) associated with an individual, whereby depending on whether the respective biometric is detected or not detected in the reflected sensing signals received by the receiver device or a receiver unit in the transmitter device, the sensing session may be continued or aborted, or the sensing information may be approved for further processing/storage or discarded, or a different target or receiver may be selected.

According to an embodiment which may be combined with any other embodiment or implemented independently, the receiver initiates an emergency call with a public safety answering point via the (cellular) network to which it is attached, and based on location information provided/acquired during the emergency call according to local regulations (e.g. Enhanced 911), a transmitter in vicinity of the originating location of the emergency call (e.g. a base station in vicinity or a mobile phone in the vicinity or the mobile phone making the emergency call) may get instructed to perform a sensing session for a designated target victim, whereby the instructions may include authorization information, information about the target (incl. some characteristics of the target victim, e.g. if the target victim is not moving, lying on the ground, has cardiac arrest) or the context (e.g. how many people are gathered around the victim, distance between people and their devices relative to the victim, number of injured people, debris in vicinity) or an address (e.g. IP address, URL) of a destination server, network function/device or public safety answering point, or a credential (e.g. public key) to be used for encrypting the results. Also, one or more receivers (also if receiver is part of the same device as the transmitter) gets activated to participate in the sensing session, upon which the transmitter and receiver may perform sensing according to the other embodiments in this document).

The results of sensing operations are expected to be communicated securely (e.g. by using the provided credential) to the provided destination address (e.g. of the public safety answering point)

A complete separation of transmitter and receiver in a digital radio system such as 5G implies that the receiver has no access to the analogue version of the directly emitted signal (phase, frequency), only the reflected signal, and therefore cannot form the IF signal in the analogue domain. This would mean that all processing is performed on the received analogue signals (which requires a very fast ADC is to digitize the received 'raw' sensing signal).

Furthermore, in the proposed distributed radar sensing system, the distance to the reflecting surface of the target 150 depends on both the distances from the transmitter to the target 150 and from the receiver to the target 150 (rather than simply being twice the distance from the transmitter to the target, as in non-distributed radar systems).

The 'minimum range' of the measurement corresponds to the direct distance from the transmitter to the receiver. Of course, objects may be measured which lie at smaller distances from the receiver, but their indicated range will always be greater than the direct distance from the transmitterto the receiver. Equal time returns lie on spatial position ellipses (return ellipses) having the transmitter and receiver positions as their two focal points. The minimum (degenerate) ellipse with a short axis length of zero (a straight line between transmitter and receiver) has a minimum delay time, which is the time taken for radio waves to go directly from transmitter to receiver.

The receiver may receive a signal corresponding to the directly transmitted signal straight from the transmitter to the receiver (a pseudo-surface at 'zero' range, i.e., points on the direct line between transmitter and receiver).

Therefore, the proposed integrated distributed radar system may require a kind of clock-level synchronization between transmitter and receiver to remove ambiguity in sensing parameter estimation.

Furthermore, the auxiliary information signals (e.g., radar request and responded parameters) can be communicated between the transmitter to the receiver via an alternative communication route (using e.g. a separate band, a beam formed sub-beam directed at the receiver, or time interspersed signals between sensing signals) so that the receiver can obtain a representation of required details of the transmitted signal (e.g., precise timing, phase of the continuous (chirp) signal) in order to simulate the mixing of the transmitted and received signals to obtain an IF signal without requiring direct analysis of the analogue emitted signal. This could be done by, for example, internally generating an analogue version of the identical emitted sensing signal using the parameters supplied via the auxiliary information signal. Thus, to ensure that a correct timing is provided for this mixing of a simulated transmitter sensing signal and the actual received sensing signal, the transmitter should signal the precise timing, phase, frequencies etc. of the emitted signal to the receiver ahead of time.

Furthermore, the receiver may use the auxiliary/(pre-)configured information/parameters about the sensing signal to distinguish between a sensing signal received via a direct non-reflected path, versus reflected signals. The receiver may ignore the sensing signals received via a direct non-reflected path (e.g. by ignoring the first instance of receiving the sensing signal (for example by checking the arrival time of the sensing signal, or by checking for phase shifts, frequency changes, signal deformations, amplitude changes, interference patterns that correspond to identify which of the sensing signals has been reflected or not), or may use these signals to more accurately determine its relative position/distance/angle towards the transmitter. The receiver may also use the signal received via a direct non-reflected path as further input to the signal analysis algorithm/model, e.g. as additional reference signal for IF calculation, (relative) position calculation or additional phase shift/signal deformation/frequency/amplitude calculations.

Additionally, the distance and angle from the transmitter to the receiver or the absolute/geographical position of the transmitter may be signaled as well, in order to calculate the correct positions for detected surfaces.

Finally, if the receiver (ortransmitter, or both) is a hand-held device, the movements and vibrations of that device(s) may be measured by corresponding sensors, in order to subtract them from the movements and vibrations of the detected surfaces for some sensing applications.

According to an embodiment which may be combined with any other embodiment or implemented independently the transmitter determines based on an estimated position of the sensing target and the (relative) position of the receiver and/or the estimated angles/distances between the transmitter, target and/or receiver and/or the size/shape of the target and/or material/reflectivity characteristic of the target that the sensing signals will not be able to reach the receiver with the desired quality (e.g. because the target is expected to obscure the receiver, the distances are too big, the target may not sufficiently reflect the sensing signal or may absorb the sensing signal too much) and may decide to reposition itself, delay sending the sensing signals (e.g. wait until the target, the receiver or transmitter have moved to a new position), adapt the sensing signal transmission characteristics/waveform, send information/instructions to the receiver (e.g. warning signal, request the receiver to move closer or further away to the position of the target or change its angle towards the target, reconfigure its antennas, adapt the sensing signal parameters), select another receiver for sensing of the target, or send signal to another transmitter to initiate the sensing of the target. Additionally or independently the receiver may determine based on the received sensing signal parameters (incl. the timing of the signals) or received information about the target (e.g. location/angle/distance, size/shape, material/reflectivity characteristics) that the receiver is not able to receive a sensing signal with sufficient quality and/or has not yet received during a certain time period after the start time a sensing signal with sufficient quality, and may decide to reposition itself, send message/information/instructions to the transmitter (e.g. warning signal, request the transmitter to move closer or further away to the position of the target or change its angle towards the target, reconfigure its antennas, adapt the sensing signal parameters), send signal to another receiver for sensing of the target, or send signal to another transmitter to initiate the sensing of the target.

Fig. 2 schematically shows a summarizing architecture (including optional elements and functions) of a communication system with distributed sensing capability according to various embodiments.

The proposed distributed radio wave sensing radar/communication system comprises a transmitter device (TX) 10 and a receiver device (RX) 20 and is configured to operate over a suitable radio frequency range (such as the initially mentioned mmWave range) and comprises RF hardware and signal processing algorithms to enable both standard communication, e.g., 5G, and radar sensing for vital signs, object detection and/or movement recognition.

The transmitter device (TX) 10 may be an access device (e.g., base station) or a terminal device (e.g., UE or Internet of Things (loT) device) and comprises a standard transmitter communication unit or system (S-TX-COM) 101 enabling standard communication, e.g., 5G, capabilities using e.g. DFT-s-OFDM generated data communication signals. By operating in a 'radar mode', the transmitter communication system 101 is capable of forming a radar mode signal generator (RM-SIG-GEN) 102 capable of e.g. generating linear chirp signals (chirps) using minimally modified communication components. This can be achieved e.g. by a using (slightly) modified DFT-s-OFDM with a suitable FDSS filter for converting the single-carrier nature of the DFT-s-OFDM signal to a linear combination of chirp signals circularly translated in the time domain, as described e.g. in Alphan Sahin et al.: "DFT-spread-OFDM Based Chirp Transmission*".* By exploiting properties of Fourier series and Bessel function of the first kind, an FDSS filter for an arbitrary chirp can be obtained.

Furthermore, the transmitter device 10 comprises a mmWave transmission frontend (TX/ANT) 103 including a transmitter coupled to antenna with beam forming capabilities.

Optionally, a mmWave reception frontend (RX/ANT) 104 may be provided (e.g., as a separate component or integrated with the transmission frontend 103 in joint mmWave transceiver frontend), which includes a mmWave receiver coupled to a mmWave antenna with beam forming reception capabilities (e.g., if an additional non-distributed transmitter-only radar operation is to be performed to determine a target location, shape/size or material/reflectivity characteristic).

Additionally, the transmitter device 10 comprises a transmitter clock generator (TX-CLK) 105 for generating an accurate system clock for the transmitter device 10.

Optionally, a transmitter time delay measurement functionality (not shown) may be provided (e.g., implemented by a processor/controller of the transmitter device 10), which uses the standard transmitter communication unit 101 to perform a two-way time delay measurement with a cooperative receiver device (e.g., the receiver device 20).

Optionally, an encryption and decryption functionality (ENCR/DECR) 106 may be provided for implementing a suitable data encryption/decryption scheme (based on e.g. the Advanced Encryption Standard (AES) algorithm or the Rivest, Shamir and Adleman (RSA) algorithm) and data integrity verification (e.g., a data verification scheme using a message authentication code or digital signatures). For instance, data might be distributed in a protected radio resource control (RRC) message.

As a further option, the transmitter device 10 may comprise a non-distributed (low-resolution) mmWave transmitter radar analysis system (L-RES RAS) 107, i.e., a radar analysis system that may comprises a receiver device and/or may comprise a (low-resolution) mmWave transmitter radar analysis system, which provides a non-distributed mmWave location radar scanning capability, which may include an intermediate frequency (IF) generation mixer (IF-MIX) 107-1 to which a copy of an emitted sensing signal and an externally received reflected sensing signal are supplied and mixed to generate a mixed signal including an IF signal. Furthermore, the transmitter radar analysis system 107 may comprise electronic signal processing components - including a transmitter band pass filter (BPF) 107-2 and an analogto-digital converter (ADC) 107-3 - capable of IF filtering and analogue to digital conversion of the generated IF signal. Moreover, the transmitter radar analysis system 107 may comprise a digital signal processing component and algorithm system (DSP, implemented by e.g. a digital signal processor) 107-4 which provide DSP capabilities for e.g. location detection, preprocessing by clutter removal etc.

As a still further option, the transmitter device 10 may comprise sensor components including transmitter movements sensors (TX-MOV-SEN) 108, such as accelerometers or the like, which measure movements and vibrations of the transmitter device 10.

Furthermore, the receiver device 20 may be an access device (e.g., base station) or a terminal device (e.g., UE or Internet of Things (loT) device) and may comprise a standard receiver communication unit or system (S-RX-COM) 201 that provides standard communication capabilities, e.g., in 5G, using e.g. DFT-s-OFDM-generated data communication signals. By operating in a 'radar mode', the receiver communication system 201 may be capable of forming a radar mode signal generator (RM-SIG-GEN) 202 that e.g. generates linear sensing signals e.g. by using a (slightly) modified DFT-s-OFDM signal, wherein the generated sensing signals may be used internally and not coupled to a transmitter and antenna. The waveform of the sensing signal may be generated from specific input parameters that may include at least one of a specific start time, a phase, an amplitude, a base frequency, a band width, a frequency slope, a sensing signal repetition frequency, a gap between sensing signals, and a total number of sensing signals.

Furthermore, the receiver device 20 comprises a mmWave reception frontend (RX/ANT) 204 which includes a mmWave receiver coupled to a mmWave antenna with beam forming reception capabilities.

Additionally, the receiver device 20 comprises a receiver clock generator (RX-CLK) 205 for generating an accurate system clock for the receiver device 20.

Optionally, a receiver time delay measurement functionality (not shown) may be provided (e.g., implemented by a processor/controller of the receiver device 20), which uses the standard receiver communication unit 201 to perform a two-way time delay measurement with a cooperative transmitter device (e.g., the transmitter device 10).

Optionally, an encryption and decryption functionality (ENCR/DECR) 206 may be provided for implementing a suitable data encryption/decryption scheme (based on e.g. the Advanced Encryption Standard (AES) algorithm or the Rivest, Shamir and Adleman (RSA) algorithm) and data integrity verification (e.g., a data verification scheme using a message authentication code or digital signatures) matched to the scheme(s) used on the transmitter side. For instance, data might be distributed in a protected radio resource control (RRC) message.

As a further option, the receiver device 20 may comprise a (low-resolution) non-distributed mmWave radar analysis system (L-RES RAS) 207 which provides a non-distributed mmWave location radar scanning capability, i.e., a radar analysis system that may comprises a receiver device and/or may comprise a (low-resolution) mmWave transmitter radar analysis system, which may include a mmWave transmitter frontend (TX/ANT) 204 including a transmitter coupled to a mmWave antenna with beam forming capabilities of the receiver device 20.

Additionally, the (low-resolution) radar analysis system 207 may include components which are shared with an additional high-resolution distributed mmWave radar analysis system (H-RES RAS) 209 and which may comprise an IF generation mixer (IF-MIX) 207-1, to which a (internally generated) copy of an emitted sensing signal and an externally received reflected sensing signal are input to generate a mixed signal including an IF signal, electronic signal processing components including a receiver band pass filter (BPF) 207-2 and an ADC 207-3 and capable of IF filtering and analogue to digital conversion of the generated IF signal, and an electronic and digital components and algorithm system (DSP, e.g., a digital signal processor) 207-4 which provide DSP capabilities for e.g. location detection, preprocessing by clutter removal etc.

The high-resolution distributed mmWave radar analysis system 209 may be configured to share electronics components of the IF generation mixer 207-1, which is configured to mix the inputs of an internally generated sensing signal based on supplied timing/phase parameters produced by the radar mode signal generator 202 and an externally received sensing signal supplied by the receiver frontend 204, electronic components of the receiver band pass filter 207-2 and ADC 207-3, which take an analogue IF signal, filter it with a suitable bandpass filter and perform analogue to digital conversion, and the electronic and digital components and algorithm system 207-4, which provides DSP capabilities for desired applications, including pre-processing by clutter removal etc., in order to prevent leakage/tampering of potentially privacy sensitive sensing information about a target, the radar analysis should run in a secure tamper-resistant subsystem, and the resulting sensing information should be stored on a secure storage and/or encrypted with non-tamper resistant credentials (such as subscriber identity module (e.g., USIM) credentials)

Alternatively, a final digital processing could be off-loaded from the receiver device 20 to the transmitter device 10 a network function/device or a cloud computing resource, which may return obtained results.

Optionally, the receiver device 20 may comprise a user Interface (UI/MEM) 210 with data storage and display capabilities, which can input information from a user, store data in the receiver device 20 and output displays to the user. Specific elements of the user interface 210 may be dependent on the type of receiver device (e.g., UE) and its function. For example, a hand-held smartphone device may have a sophisticated user interface 210 and display, while an loT monitoring device may simply have a visual or auditory alarm.
As a further option, the receiver device 20 may comprise receiver movements sensors (RX-MOV-SEN) 208 such as accelerometers, cameras, structured light sensors, etc., which measure movements and vibrations of the receiver device 20, and locations of nearby objects.

The receiver device 20 may also communicate via its transmitter standard communication unit 201 to the transmitter device 10 its movements and vibrations by using a receiver movement data series during a sensing time interval, which have been obtained by the receiver movements sensors 208. The receiver movement data series may be sent to the transmitter by using a separate communication channel between the receiver and transmitter (e.g. as a series of RRC or MAC Control Element messages).

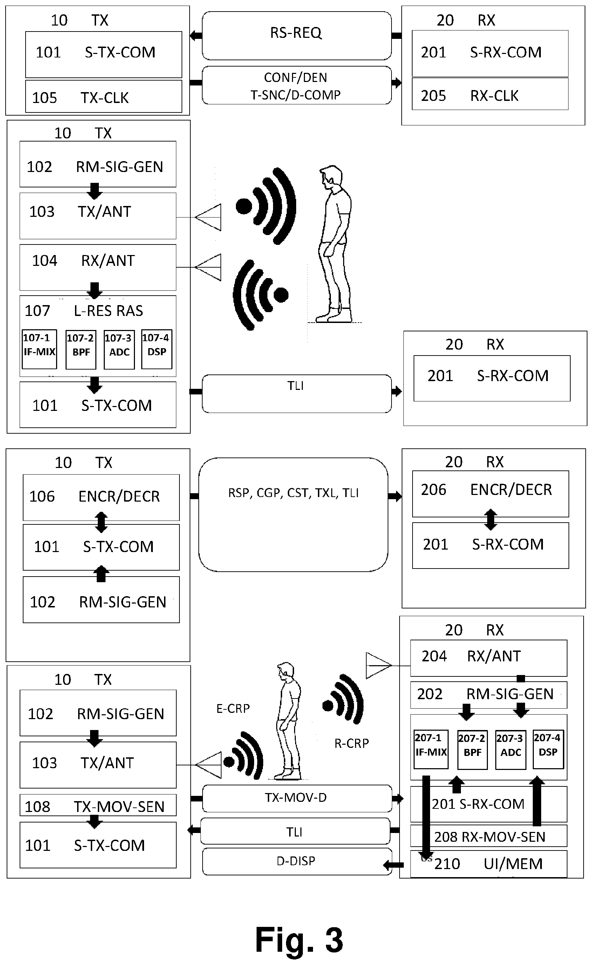

Fig. 3 schematically shows a process flow diagram for radar sensing in a communication system according to an embodiment.

In the following, a process for a distributed mmWave radar sensing function in a 5G communication infrastructure (as shown in Fig. 2) is described. The process is designed to produce a distributed system of a transmitter device 10 (e.g., base station or UE) and receiver device 20 (e.g., base station or UE) capable of both standard mmWave communication and distributed radar sensing of a local environment.

In Fig. 3, the components/blocks of the architecture of Fig. 2 that are involved in the process are indicated but not described again.

The receiver device 20 uses its receiver standard communication unit 201, e.g. 5G, to transmit to the transmitter device 10 a request that a radar measurement is required (i.e., a radar service session request (RS-REQ)), optionally along with the position of the receiver device 20.

Alternatively, the transmitter device 10 could request a distributed radar session with a selected receiver device (e.g., UE) or multiple receivers that could be supported simultaneously.

Optionally, an initial position of the receiver device 20 may be obtained from a current known location of the receiver device 20 (if available) or already be known to the transmitter device 10.

Optionally, the receiver device 20 may transmit a rough indication of direction and range to a target as a target initial location estimate, which may be derivable from estimated values supplied by a user and/or based on a measurement made by a local terminal device (e.g., UE).

In an example, the receiver device 20 may also transmit a required scan time (i.e., a length of time during which a radar scanning is performed). This may depend on the desired application (for example vital signs scanning might require an extended scanningtime while object location/counting may only require only a very short session (one scan)). Monitoring the position of an infrastructure object may require a short scan once per day for some extended period. The transmitter device 10 may be configured to generate sensing signals for a number of receiver devices, in which case the sensing signals are generated up to the latest required time for any of the receiver devices.

In case the transmitter has received a radar measurement request, the transmitter device 10 determines if it can respond to the request from the receiver device 20 and may transmit to the receiver device 20 a radar session confirmation (CONF) or a radar session denial (DEN) message. It may be unable to provide radar capabilities if, for example it is unable to make available sufficient bandwidth for the radar signals given its current communication demands, or if it is currently performing a radar function for another receiver device and cannot perform both, or if the receiver device 20 does not have permission to request a radar function from the transmitter device 10.

If the receiver device 20 asks for resources, the transmitter device 10 may also indicate its allocated resources. This option may be implemented similar as a dynamic resource allocation process in 5G or other standard communication systems. Thus, the receiver device 20 may send to the transmitter device 10 a resource scheduling message requesting the scheduling of radar session resources, and the transmitter device 10 replies to the receiver device 20 with a downlink control information (DCI) message including the allocated resources (e.g., time (timeslot, k2,...), frequency, etc.).

Alternative, if the receiver has not asked for resources of if the radar measurement is initiated by the transmitter, the transmitter device 10 may voluntarily send the allocated resources for radar based sensing to the receiver device. To indicate that it involves radio resources for radar based sensing a dedicated DCI message may be used that may include some of the auxiliary/configuration information.

For sensing, it might make sense to use a semi-persistent scheduled resource allocation in which the transmitter device 10 sends the allocated resources for the radar session in a secure RRC message, reserved on a regular basis for a given period of time. If in addition an offset and/or time interval for radar based sensing is sent to the receiver device, e.g. as part of the semi-persistent resource schedule or same RRC message or as a different message, then the start of the radar based sensing may be activated/triggered at the receiver by the transmitter by sending a subsequent DCI message with the corresponding Semi-Persistent Scheduling C-RNTI to the receiver.

Once resource scheduling is performed, the receiver device(s) 20 are aware of the timing/frequencies used for the (distributed) radar functionality.

Optionally, a time synchronization (T-SYNC) and delay compensation (D-COMP) measurement process may then be initiated, where the transmitter and receiver clocks are synchronized. This may not be necessary for applications where a high level of clock synchronization for sensing or distance measurements (i.e. ranging) is not required.

This measurement process may be achieved by having the transmitter device 10 send a timing signal (clock synchronization signal) that reflects the current timing of the transmitter clock to the receiver device 20 using its standard communication unit, and by having the transmitter device 10 perform a round trip time delay measurement from the transmitter device 10 to the receiver device 20 and back using the transmitter time delay measurement functionality and with the receiver device 20 using the receiver time delay measurement functionality resulting in a measured delay time (transmitter-receiver delay), and by having the receiver device 20 update the receiver clock time using both the clock synchronization signal and the transmitter-receiver delay, thereby ensuring that the two clocks of the transmitter device 10 and the receiver device 20 are completely synchronized.

As an optional measure, the transmitter device 10 may then obtain a (relative) position, shape/size or material/reflectivity characteristic of a desired target to direct its mmWave transmitter towards that location. This can be achieved by at least one of:
(i) having the receiver device 20 send to the transmitter device 10 the position of the target obtained from an initial target location estimation which may have been obtained by a user entering details of the target position, or some other form of relative location estimation performed by the receiver device 20; or
(ii) as shown in Fig. 3, having the transmitter device 10 perform a low-resolution scan of the environment and select a suitable target direction for detailed radar transmission, where the radar mode signal generator 102 sends sensing signals via the transmitting frontend 103, reflected sensing signals are received by the receiving frontend 104, and the transmitter low-resolution non-distributed mmWave radar analysis system 107 is used to process the signal (e.g., a standard FMCW scan using a sweep of beam forming directions to determine approximate surfaces in the scene and obtain a target location information); or
(iii) having the receiver device 20 perform a low-resolution scan of the environment and select a suitable target direction for the detailed radar transmission, wherein the radar mode signal generator 202 sends sensing signals to the transmitting frontend 203, reflected sensing signals are received by the receiving frontend 204, and the receiver low-resolution non-distributed mmWave radar analysis system 207 is used to process the signal (e.g., a standard FMCW scan using a sweep of beam forming directions to determine approximate surfaces in the scene and obtain a target location information which is then communicated to the transmitter device 10); or
(iv) having the transmitter device 10 identify a device carried by the target subject (e.g. matching the identity of a known device in a device database) by using the signals/communication messages received from that device through the receiving frontend 104 of the transmitter device, and use the measurement or location information of that device to determine a rough location of the sensing target. In a particular example, the target sensing subject (e.g., a person) is carrying a receiver device 20 that can also be used for performing the distributed radar sensing measurements; or
(v) having the transmitter device 10 receive information from a sensor, camera or surveillance system (e.g. capable of generating heat maps or process video footage) and/or through an external application interface (e.g. Network Exposure Function) about potential target subjects for radar based sensing; or
(vi) having the transmitter device 10 use CSI information received from a set of devices in an area and use this to calculate changes and/or interruptions/occlusion of certain signals to detect some activity/movement of an object in the area, and use that to determine a rough location of a potential sensing target; or
(vii) having the transmitter device send an initial set of signals (possibly at different frequencies, varying waveforms, varying bandwidth, and various beam steering directions/angles/focal areas) and receive reports from a set of receiver devices 10 that have received one or more of these signals, including timing information of receiving the signal(s), and processed information regarding these signal(s), such as IF signal information or angle of arrival, and using the information from these reports to determine a rough location of a potential sensing target.

Then, the transmitter device 10 selects an appropriate transmitter target direction for beam forming for the distributed radar function from the target location information.

Furthermore, the transmitter device 10 selects appropriate parameters of the sensing signals to be generated for the distributed radar function. The sensing signal generation parameters may be chosen to meet at least one of bandwidth/frequency constraints at the transmitter device 10, limits on the sensing signal generation capabilities of the radar mode signal generator 102, and requirements of the radar application e.g. as requested by the receiver device 20. Such sensing signal generation parameters may include at least one of a number of sensing signals (related to the scan time and application requirements), a sensing signal repetition rate (alternatively, a delay between chirps), a sensing signal frequency slope, a sensing signal bandwidth, a lowest sensing signal (starting) frequency, an initial sensing signal phase, and a sensing signal start time (precise time for the first sensing signal, that may be selected at a later time).

Further details about the relationship between sensing signal parameters and accuracies of positioning and velocity (as well as the use of triangular chirp signals rather than linear chirp signals) can be gathered from e.g. Pasi Koivumäki: "Triangular and Ramp Waveforms in Target Detection with α Frequency Modulated Continuous Wave Radar", School of Electrical Engineering, Espoo 23/01/2017.

Before or thereafter, the transmitter device 10 uses its transmitter standard communication unit 101 (e.g., 5G) to send receiver information such as at least one of radar session parameters (RSP), the sensing signal generation parameters, the sensing signal start time (CST), the transmitter location (TXL, own location of the transmitter device 10), and the target location information (TLI) and other information about the target (e.g. shape/size, material/reflectivity characteristic) to the receiver device 20, e.g., as part of an RRC message, such as a measurement configuration included in the RRC Reconfiguration message or the RRC Resume message).

The transmitter receiver information is received by the receiver standard communication unit 201 (e.g., 5G) and (optionally) decrypted and verified at the receiver device 20 using a suitable process (e.g., decryption algorithm).

It is noted that any of the data exchanges in any of the methods described herein may be protected between the transmitter device 10 and the receiver device 20, where protected can mean integrity protected and/or encrypted. The integrity protection may be required to make sure that an attacker cannot tamper with the required radar parameters, e.g., the chirp generation parameters. The encryption may be required, e.g., to make sure that an attacker located close by to the receiver device 20 cannot use the transmitted signal to monitor the target.

Optionally, if specific ranging and positioning is required, the receiver device 20 may derive a relative position offset (or alternatively distance and angle) between the transmitter device 10 and the receiver device 20 and an equivalent time delay (transmitter-receiver delay) by at least one of using the transmitter location plus its own known receiver location to calculate the relative position offset (and equivalent light transit time) between the transmitter device 10 and the receiver device 20, or determining from a round trip delay measurement from the receiver device 20 to the transmitter device 10 and back the time delay using the receiver time delay measurement and with the transmitter device 10 using the transmitter time delay measurement, or reusing the above obtained transmitter-receiver delay.

This relative position/distance/time delay can be used to derive the time at which the transmitter sensing signal is to be emitted and received, and in subsequent digital signal processing to enable knowledge of the points in the environment or scene, which lie on spatial ellipses of equal delay time defined by the transmitter device 10 and the receiver device as focal points.

The relative position/distance/time delay information provided to the receiver can also be used to delay/trigger the start time of an active sensing time interval at the receiver, e.g. such that only reflected signals are sensed/received and taken into account for the sensing algorithm, and not the first signal that reached the receiver through a direct path without reflections.

At the sensing signal start time, the transmitter device 10 uses the radar mode signal generator 102 operating on the sensing signal generation parameters and emits a sensing signal or a sequence of sensing signals (E-CRP) with an antenna beam formed in the direction of the transmitter target.

The transmitter device 10 may also communicate via its transmitter standard communication unit 101 to the receiver device 20 its movements and vibrations by using transmitter movement data series (TX-MOV-D) during a series of sensing signal transmissions or sensing interval (e.g., a chirp sequence transmission), which have been obtained by the transmitter movements sensors 108. The transmitter movement data series may be sent along with the sensing signal (e.g. encoded in the signal) or by using a separate communication channel between the transmitter and receiver (e.g. as a series of RRC or MAC Control Element messages).

The receiver device 20 receives reflected sensing signal (R-CRP) by calculating the direction to the target and/or the expected delay for the signal to arrive via a path reflected via the target from the target location information supplied to it by the transmitter device 10. Alternatively, the receiver device 20 can search for the radar reflections until it finds a desired signal, e.g., a signal that corresponds to the (pre-)configured/received sensing signal characteristics (e.g., waveform, frequency, preamble, encoded identity, ...), or the maximum returned signal, or which corresponds to a certain pattern (based on the application) in the reflected sensing signals (e.g. that may be indicative/representative of a vital sign or movement of an object), and use this direction as the receiver target direction.

Alternatively, if the receiver device 20 is willing to allow a number of sensing signals to be transmitted before analysis can begin and the beamformed radar transmission direction is not known to the receiver device 20, it can scan the environment or scene using beamforming and detect a direction giving the highest sensing signal returns and store this as receiver target direction.

The receiver device 20 then directs its antenna of the receiving frontend 204 using beamformed reception at the receiver target direction and collects reflected radio signals to form the received signal.

Then, the receiver device 20 may starts an IF signal generation process by using the sensing signal generation parameters and optionally the sensing signal start time and the transmitter-receiver delay to generate an internal analogue signal (i.e., a synthetic sensing signal that precisely matches the emitted sensing signal) by its radar mode signal generator 202. It may combine this internal analogue signal with the received signal in the IF mixer 207-1 to generate an IF signal. Options for this signal combination can be that the synthetic sensing signal is timed to match the sensing signal start time (exact time that the sensing signal is emitted by the transmitter device 10) or that the synthetic sensing signal is timed to match the time when the sensing signal will arrive at the receiver device 20 by a direct path (that is, the synthetic sensing signal time is equal to the sensing signal start time plus the transmitter-receiver delay), or that the synthetic sensing signal time is equal to the sensing signal start time plus some defined fraction of the transmitter-receiver delay.

A reason for adding the transmitter-receiver delay (or some fraction of the delay) can be to obtain a minimum range (i.e., minimum IF frequency) that is zero (or some minimum value) rather than representing the distance to the transmitter device 10, to thereby reduce the IF frequencies and increase the available range of detection (by reducing the 'measured range' of detection).

In an example where an object is to be positioned exactly, it is assumed that the transmitter device 10 can also receive radar signals (i.e., it comprises a non-distributed radar as well) and thus estimate a distance D1 to any object because of the usage of e.g. an FMCW radar. The receiver device 20 knows exactly when the transmitter device 10 starts sending a sensing signal and can estimate the distance D2 from transmitter device 10 to receiver device 20 through the reflected path. In this case, the distance D3 from receiver device 20 to the object can be calculated as D3=D1-D2. Thus, if the locations of the receiver device 20 and the transmitter device 10 are known (e.g., in case of a distributed access device (e.g., gNB-DU)), then this embodiment could be used to enhance positioning algorithms

Similarly, if the transmitter device 10 can receive radar signals and is able to accurately calculate the distance D1 and/or angle A1 between the transmitter and the sensing target, and forwards this information together with its own (relative) position information, then the receiver device can use this information together with information of the received sensing signal via a direct non-reflected path (i.e., typically the first instance of a series of sensing signals) and via a reflected path to accurately calculate the distance between the receiver and the transmitter, or its position relative to the transmitter, or its absolute geographical position, more accurately.

Additionally to other embodiments or independently from other embodiments, if the transmitter device 10 can receive radar signals and is able to accurately calculate the distance D4 and/or angle A4 between the transmitter and the receiver device, e.g. by directing the radar sensing and beam forming towards the receiver device, and transmits D4 and/or A4 (possibly together with position information of the transmitter) to the receiver device, the receiver device can use this information to calculate its position or e.g. use it to verify or further improve the accuracy of distance D4 and/or angle A4 or detect movement of the transmitter relative to the receiver by correlating the received distance D4 and/or angle A4 with the sensing signals it may receive itself from the transmitter via a direct non-reflected path.

In those examples where either the transmitter device 10 or the receiver device 20 optionally comprise a non-distributed radar, positioning information might also be derived from alternative positioning or ranging technologies, e.g., 5G positioning or ranging technologies, such as round-trip time, angle of arrival, time of flight, etc. enabled by means of, signals, e.g., positioning signals through either standard Uu interface or the PC5 (sidelink) interface.

Following the generation of the IF signal in the IF mixer 207-1 of the receiver device 20, the signal is band-pass or low-pass filtered and converted to a digital signal using the filter and ADC components 207-2 and 207-3. The IF signal is high-pass filtered (as part of the band pass filter) if the use of the IF data requires removing returns (reflected chirp signals) below some minimum 'range' (distance from the transmitter device 10 to the target and return to the receiver device 20). Furthermore, the IF signal can be low-pass filtered to prevent aliasing at the upper frequency range of the ADC 207-3.

The resulting digital data obtained from the ADC 207-3 may be processed using the digital signal processing system 207-4 to yield application specific data. Alternatively, the digital signal processing can be dispensed with by communicating the resulting digital data to the transmitter device 10 (e.g., as an RRC measurement report) or network function/device (e.g. NAS message or User Plane message). The processed received sensing signal and/or the application specific data and/or other sensing information/results may be transmitted to the transmitter device 10 or a cloud computing resource, e.g., an edge server, and returning the processing result to the receiver device 20.

Optionally, the receiver device 20 may send an updated and improved target location information (TLI) and/or location/movement/vibration information of the receiver device (acquired by its movement sensor 208) to the transmitter device 10 during the radar process based on the results of the above digital signal processing, using standard (e.g., 5G) communication between the receiver device 20 and the transmitter device 10, to enable continuing accurate beamforming by the transmitter device 10 towards the target or to adjust the beamforming by the transmitter device 10 towards the target, or to adjust the sensing signal sent by the transmitter device 10, or to adjust the sensing signal configuration information to be used by the transmitter device 10 and/or to be sent to receiver devices, or to update the location information of the target and/or the receiver by the transmitter device 10, based on the target location information and/or receiver location/movement/vibration information and/or the processed sensing signal and/or the resulting digital data and/or the application specific data and/or other sensing information/results received from the receiver device 20 during the course of the distributed radar process.

It is noted that the receiver device 20 may have limited information on the exact position of the target due to reflected signals of equal delay time lying on spatial ellipses (restricted to some extent by the beam width of the transmitted signal). A target object may be moving to the edge of the transmitter beam, so that the transmitter device 10 may need to update its transmitter target direction.

Optionally, a movement compensation may be performed, where detected movements of the transmitter device 10 and/or the receiver device 20 are subtracted during data processing, wherein the receiver movement sensors 208 obtain sensor signals (movement data series) of the movements of the receiver device 20 and the transmitter movement sensors 108 obtain movements of the transmitter device 10.

Finally, input information may be collected and the resulting digital data (D-DISP) may be stored and displayed by the receiver device 20 using its user interface and data storage 210. The precise nature and details of the user interface, data storage and display process may depend on the type and nature of the receiver device 20 (e.g., UE) and may range from a high-resolution display with sophisticated user interface to a very simple number display or generation of an alarm.

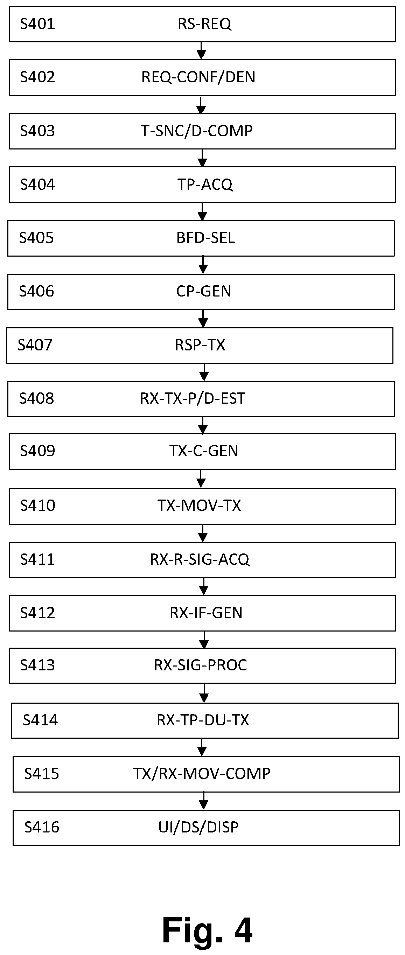

Fig. 4 schematically shows a flow diagram of a sensing process, e.g., a radar-based sensing process, between a transmitter device and a receiver device according to an embodiment.

In an optional initial session request step (RS-REQ) S401, a receiver device (e.g., access device or terminal device) may use wireless communication to transmit a service session request along with information about the position of the receiver device to a transmitter device (e.g., access device or terminal device) to inform the transmitter device that a measurement is required. Optionally, an initial target location estimate plus the required scan time may be supplied as well by the receiver device.

In a responsive request confirmation/denial step (REQ-CONF/DEN) S402, the transmitter device determines if it can respond to the request (for example make available sufficient bandwidth for the signals given its current communication demands) and transmits to the receiver device a confirmation or denial response.

Alternatively, the transmitter device can look up potential receiver devices close to the intended target (e.g. by requesting the last known position from a location database/service, or by requesting the potential receiver devices to send their known position information, or acquiring the position from the potential receiver devices through trilateration/triangulation/round trip time calculations based on signals received from the potential receiver devices) and can voluntarily requests a receiver device to be used for sensing.

Then, a time synchronization and delay compensation step (T-SYNC/D-COMP) S403 is initiated, where a receiver clock is synchronized to a transmitter clock by sending a timing signal to the receiver device.

In a subsequent target position acquisition step (TP-ACQ) S404, a target location information is determined by the transmitter device, e.g., by performing an approximate radar object location scan in the direction indicated by the receiver device as target initial location estimate.

Then, in a transmitter beamforming direction selection step (BFD-SEL) S405, the transmitter device selects an appropriate direction (for beamforming) for a distributed sensing function based on the target location information as transmitter target direction.

In a following signal parameter generation, e.g., chirp parameter generation step (CP-GEN) S406, the transmitter device selects appropriate parameters of the signals and generates matching parameters for signal generation (e.g., by DFT-s-OFDM processing).

Then, in a subsequent (radar-based) sensing session parameter transmission step (RSP-TX) SD407, the generation parameters and a selected start time plus the location of the transmitter device along with a determined target location information are protected, e.g., encrypted using an encryption algorithm, and sent to the receiver device where it is decrypted using a corresponding decryption algorithm.

In a following receiver-transmitter relative position and delay estimation step (RX-TX-P/D-EST) S408, the receiver device uses the transmitter location plus its own known receiver location or a round trip delay measurement to calculate a relative offset (and equivalent light transit time) between the transmitter device and the receiver device.

At the signal (e.g., chirp) start time, the transmitter device initiates a transmitter generation step (TX-C-GEN) S409 and generates and emits a signal or a sequence of signals based on the generation parameters via an antenna beam formed in the direction of the transmitter target direction.

In an optional transmitter movement series transmission step (TX-MOV-TX) S410, the transmitter device communicates its detected movements and/or vibrations during the sequence to the receiver device as transmitter movement data series.

In a receiver reflected signal acquisition step (RX-R-SIG-ACQ) S411, the receiver collects reflected radio signals using beamformed reception directed at the target, to obtain a received signal.

The above steps S401 to S411 can also be applied to CSI-based distributed sensing systems, where the procedure ends here.

The following steps S411 to S416 can be added for radar/chirp-based distributed sensing systems.

In a receiver IF signal generation step (RX-IF-GEN) S412, the receiver device uses the obtained sensing signal start time, transmitter-receiver delay and sensing signal generation parameters to generate a synthetic internal analog sensing signal that matches with the emitted sensing signal and mixes this signal with the received signal to generate an IF signal.

In a subsequent receiver signal processing step (RX-SIG-PROC) S413, the resulting IF digital signal data is processed to yield application specific data (e.g., target location, movement, vibration etc.).

Furthermore, in an optional receiver target position update transmission step (RX-TP-UD-TX) S414, the receiver device may send an updated and improved target location information to the transmitter device based on the results of step S413 to enable continuing accurate beamforming by the transmitter device towards the target.

Additionally, an optional transmitter and receiver movement compensation step (TX/RX-MOV-COMP) S415 may be integrated, where measured movements and/or vibrations of the transmitter device and the receiver device are subtracted from motions detected by the radar.

Finally, in a user interface, data storage and display step (UI/DS/DISP) S416, the resulting data is stored and displayed by the receiver device and input information is collected (when necessary) using the user interface.

In the following additional embodiments, details of the application-specific processing applied to the digitized IF signal (e.g., in step S413 of Fig. 4) are described.

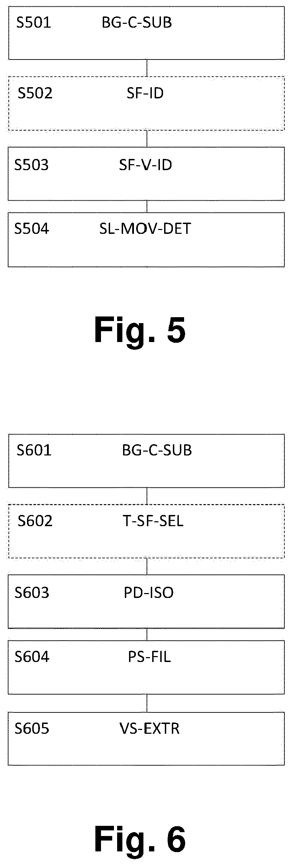

Fig. 5 schematically shows a flow diagram of a location and movement detection process according to an embodiment.

This embodiment may be relevant for use cases such as object counting, object motion detection and measurement, infrastructure monitoring and the like. In such cases, the receiver device or transmitter device may request to set up a process for regular radar operations, e.g., repeated radar sensing every 15 minutes.

In an initial background clutter subtraction step (BG-C-SUB) S501, background subtraction of clutter (e.g., undesirable multipath signals) from the digital IF signal (i.e., IF frequency data) is performed. Background subtraction may be achieved by discriminating foreground information from background information based on variations of received data at different times. This can be achieved by applying recursive moving averaging (RMA) or a Gaussian mixture model (GMM) for learning mean values of path distributions.

Then, in a surface identification step (SF-ID) S502, individual surfaces are identified from constant lines detected in the IF frequency data.

For objects with a measurable velocity, the velocity of each isolated surface is identified in a surface velocity identification (SF-V-ID) step S503 by the average phase change of the data extracted from that surface over several sequential sensing signals after phase extraction and phase unwrapping, e.g., by applying Doppler FFT. A sensing signal reflected at a moving surface incurs a Doppler frequency shift which is proportional to the velocity of the surface. This frequency shift introduces a phase shift in the detected sensing signal.

For objects with slow and long-term movement, the movement can be found in a slow movement detection step (SL-MOV-DET) S504 by determining their locations (range, direction) at regular times and calculating a change of that location over time.

Fig. 6 schematically shows a flow diagram of a heart rate and breathing rate detection process according to an embodiment.

Again, in an initial background clutter subtraction step (BG-C-SUB) S601, background subtraction of clutter from the digital IF signal (i.e., IF frequency data) is performed.

Then, in a target surface selection step (T-SF-SEL) S602, the correct surface for a targeted user is selected from a constant line in the IF frequency data (at correct range).

In a subsequent phase data isolation step (PD-ISO) S603, the phase data from the selected surface is isolated and phase unwrapped (e.g., by applying a Doppler FFT). Alternatively, the phase can be represented by complex components of sine and cosine of the signal (which avoids the need for phase unwrapping).

Then, is a phase filtering step (PS-FIL) S604, the phase signal is band pass filtered for a heart rate frequency range (e.g., 0.6 ∼ 4Hz) and/or a breathing rate (e.g., 0.1 ∼ 0.6Hz) to derive a heart rate data and/or a breathing rate data.

Finally, in a vital signal extraction step (VS-EXTR) S605, the resulting data is processed to extract the vital sign signal from the noise, for example using an algorithm such as a deep neural network trained on a dataset collected along with a 'gold standard' such as electrocardiogram (ECG) and/or stretch breathing sensors, to compensate for noise and background movements to extract the desired signal (heart rate, breathing rate), the signal variability (e.g. heart rate variability) and confidence values for the accuracy of the data values.

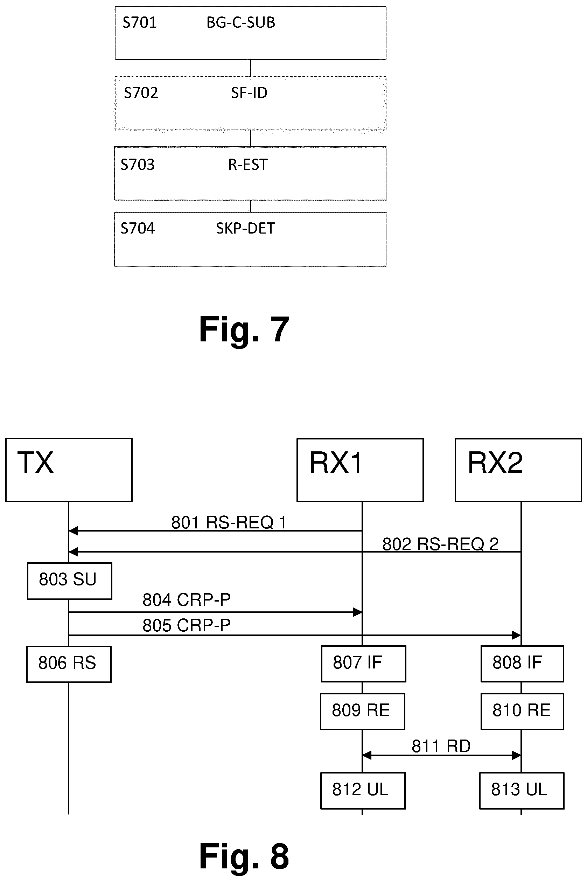

Fig. 7 schematically shows a flow diagram of a skin conductivity measurement process according to an embodiment.

Again, in an initial background clutter subtraction step (BG-C-SUB) S701, background subtraction of clutter from the digital IF signal (i.e., IF frequency data) is performed.

Then, in a subsequent surface identification step (SF-ID) S702, individual surfaces are identified from the constant lines in the IF frequency data.

In a subsequent reflectivity estimation step (R-EST) S703, the total reflectivity of a selected surface is estimated from the amplitude of the surface IF signal.

The obtained total reflectivity is then compared to a dataset of surface values in a skin permittivity determination step (SKP-DET) S704 to obtain a corresponding skin permittivity value for the mmWave frequencies used.

A small spectrum of values can be calculated for the IF amplitude of the surface over the course of the sensing signal as the mmWave frequency changes during that time.

Embodiments which include several receiver devices (as UEs, base stations or a mixture of these) may cooperate in a radar sensing process by receiving reflected radio waves from at least one transmitter device and jointly perform operations as described in the above embodiments for a single receiver device.

Fig. 8 schematically shows a signaling and processing diagram of a radar sensing process in a multi-receiver system according to an embodiment. The signaling and processing diagram indicates an information exchange between system components as an arrow and a processing step executed by a component as a block positioned below the respective component, while the time proceeds from the top to the bottom of Fig. 8.

In steps 801 and 802, first and second receiver devices (RX1, RX2) both request a radar session by signaling respective radar session requests (RS-REQ 1, RS-REQ 2) to a transmitter device (TX). Alternatively, only the first receiver might send a request in step 801 to the transmitter device. The transmitter device can look up other suitable receiver devices close to the first receiver and/or the intended target. Thus, one of the receiver devices (e.g., Rx1) sends the request and the transmitter device determines the second receiver device (e.g., Rx2) and responds in step 805 without requiring the request in step 802.

Alternatively, the transmitter device can look up potential receiver devices close to the intended target (e.g. by requesting the last known position from a location database/service, or by requesting the potential receiver devices to send their known position information, or acquiring the position from the potential receiver devices through trilateration/triangulation/round trip time calculations based on signals received from the potential receiver devices) and can voluntarily requests a first and second receiver device to be used for sensing.

In step 803, the transmitter device performs any required set-up (e.g., clock synchronization, target position estimation, transmitter/receiver position difference, etc.) for each of the receiver devices.

Then, in steps 804 and 805, the transmitter device signals to both receiver devices the signal parameters, e.g., chirp parameters, (CRP-P) and timing information. It can also be that the signal parameters in steps 804 and 805 are sent without a request from any receiver device (e.g., if the receiver devices are part of an infrastructure).

In step 806, the transmitter device performs a sensing operation, e.g., a radar sensing operation, by emitting sensing signal(s), e.g., chirp signals, in line with the signaled signal parameters and timing information.

In steps 807 and 808, the receiver devices sense sensing signals, e.g., reflected at a common target. The receiver devices then process the received reflected signals for sensing purposes, for instance, in the case of a chirp signal the receiver devices may calculate an IF signal using the received reflected chirp signals and an internally synthesized chirp signal matching the transmitted chirp signal.

Then, in steps 809 and 810, a sensing processing, e.g., radar processing, may be performed at each of the receiver devices, e.g., to generate range ellipses (RE) based on the IF frequency data obtained in steps 807 and 808 and the transmitter/receiver position difference signaled from the transmitter device or obtained at the receiver devices.

Following this, the receiver devices may exchange with each other in step 811 their derived data (RD) (for example the digitized IF data obtained using synchronized clocks along with the radar setup parameters such as distance and angles to the transmitter device or the derived range ellipse data). Based thereon, the receiver devices may detect in steps 812 and 813 a unique spatial location (UL) of a surface e.g. by finding intersections of their ranging ellipses and constraining the position by the direction angle of the transmitter beam and the beam spread angle of the transmitter beam. Alternatively, the receiver devices might send their RD to the TX (e.g., a base station) so that the TX derives the sensed data, e.g., related to the location.

In an example, the transmitter device or the core network may require a network function with a database storing the identities of the receiver devices and their locations.

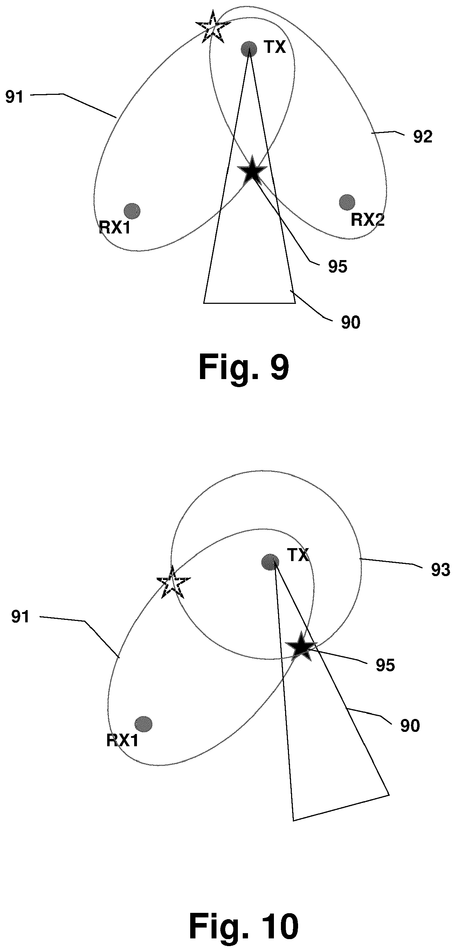

Fig. 9 schematically shows an example of an improved position location estimation with one transmitter device TX and two receiver devices RX1 and RX2 according to an embodiment.

The measured IF signals at the two receiver devices RX1 and RX2 provide a first equal-distance return ellipse (range ellipse) 91 for the first receiver device RX1 and a second equal-distance return ellipse (range ellipse) 92 for the second receiver device RX2. The two range ellipses 91, 92 provide two intersection points indicated by respective star-shaped markers in Fig. 9.

However, in the example of Fig. 9, only one of the intersection points is selected as target location 95, since it meets the following three criteria that define a unique target location:
1) located on return ellipse 91 for the first receiver device RX1;
2) located on return ellipse 92 for the second receiver RX2; and
3) located in the beam forming direction and beam spread 90 of the transmitted radar signal.

In an alternative embodiment, the transmitter device can serve as one of the multiple receiver devices, in which case, due to the colocation of the transmitter device and the receiver device, it generates a range circle of equal distance instead of a range ellipse.

A use of a transmitter device and a receiver device that both operate to receive and process the radar signals enables an improved position location estimation if the location of the receiver device and the transmitter device are known (e.g., in the case of a distributed access device unit (e.g., gNB-DU)).

Fig. 10 schematically shows an example of an improved position location estimation with one receiver device RX1 and one transmitter device TX that also operates as a receiver device, according to an embodiment.

In the example of Fig. 10, an equal-distance return ellipse (range ellipse) 91 is obtained for the receiver device RX1 and an equal-distance return circle (range circle) 93 is obtained for the combined transmitter/receiver device TX. Again, only one of the intersection points (star-shaped markers) is selected as target location 95, since it meets the following three criteria that define a unique target location:
1) located on return circle 93 for TX;
2) located on return ellipse 95 for RX1; and
3) located in beam forming direction and beam spread 90 of the transmitted radar signal.

In an alternative embodiment related to Fig. 10, the target object is also a UE with RX capabilities. Thus, the target object at the target location 95 can estimate its distance D2 to the TX by means of the received chirp signal. The receiver device RX1 can also obtain its direct (without reflection) distance D1 to the TX by means of the received chirp signal. Furthermore, the receiver device RX1 can obtain the distance D to the TX over the target location 95 by means of the received reflected chirp signal. The distance from RX1 to the target object is therefore D3 = D - D2. If the locations of TX and RX1 are known, then the location of the target object can be determined since D3 and D2 are known.

To summarize, systems and methods for providing sensing capability, e.g., radar-based sensing capability, in a wireless communication system have been described, wherein a part of the communication spectrum is configured for a period of time to enable performing sensing by establishing a distributed sensing system between a base station or terminal device (as transmitter device) and a terminal device or base station (as receiver device) in such a way that the lack of analogue signal exchange and the additional path length caused by the transmitter-receiver distance (and, in embodiments, the receiver-target distance) are corrected for, while parameters that need to be communicated are configured for the application required.

While the invention has been illustrated and described in detail in the drawings and foregoing description, such illustration and description are to be considered illustrative or exemplary and not restrictive. The invention is not limited to the disclosed embodiments. It can be applied to various types of UEs orterminal devices, such as mobile phone, vital signs monitoring/telemetry devices, smartwatches, detectors, vehicles (for vehicle-to-vehicle (V2V) communication or more general vehicle-to-everything (V2X) communication), V2X devices, Internet of Things (loT) hubs, loT devices, including low-power medical sensors for health monitoring, medical (emergency) diagnosis and treatment devices, for hospital use or first-responder use, virtual reality (VR) headsets, etc.

Moreover, the above embodiments may be implemented in a quasi-distributed deployment where the base station is a central unit (e.g., gNB-CU) and there are two distributed units (e.g., gNB-DUs), one acting as the transmitter device and the other acting as the receiver device, while the central unit may be the entity synchronizing the distributed units.

The base station may be any network access device (such as a base station, Node B (eNB, eNodeB, gNB, gNodeB, ng-eNB, etc.), access point or the like) that provides a geographical service area.

Furthermore, at least some of the above embodiments may be implemented to provide network equipment for 5G/6G/xG cellular networks or a new product class of (lowcost/mid-cost) reconfigurable intelligent surfaces to improve coverage, reliability and speed of cellular networks.

Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. The foregoing description details certain embodiments of the invention. It will be appreciated, however, that no matter how detailed the foregoing appears in the text, the invention may be practiced in many ways, and is therefore not limited to the embodiments disclosed. It should be noted that the use of particular terminology when describing certain features or aspects of the invention should not be taken to imply that the terminology is being re-defined herein to be restricted to include any specific characteristics of the features or aspects of the invention with which that terminology is associated.

The described operations like those indicated in Figs. 4 to 7 can be implemented as program code means of a computer program and/or as dedicated hardware of the related network device or function, respectively. The computer program may be stored and/or distributed on a suitable medium, such as an optical storage medium or a solid-state medium, supplied together with or as part of other hardware, but may also be distributed in other forms, such as via the Internet or other wired or wireless telecommunication systems.

## Claims

1. An apparatus for providing sensing capability in a wireless communication device (20), the apparatus comprising:
a wireless communication unit (201) for receiving a communication signal from a remote wireless communication device (10) at another communication end
a reception frontend (204) for receiving radio frequency signals;
a detection unit for detecting a sensing signal at the output of the reception frontend (204) based on sensing parameter information included in the received communication signal;
an analysis system (209) configured to perform based on the received sensing signal and the sensing parameter information included in the received communication signal at least one of:
determining a timing, phase shift, frequency, amplitude or signal deformation of the sensing signal to further determine if the sensing signal is reflected by a target object (150) or is sent via a direct non-reflected path;
generating a filtered signal to transmit to a further processing unit to extract sensing information about a target object (150); and
determining a position, a movement or a structure of a target object (150).

2. The apparatus of claim 1, where the sensing signal is a radar signal, or a chirp signal, or a training symbol of a channel state information.

3. The apparatus of claim 1 or 2, wherein the apparatus is configured to use the wireless communication unit (201) to transmit a sensing measurement request to the remote wireless communication device (10) in order to receive at least one of sensing parameter information or resource allocation information for sensing.

4. The apparatus of claim 1, wherein the apparatus is configured to use the wireless communication unit (201) to transmit at least one of a required scan time for sensing measurement and a rough indication of a direction and range to the target object (150) to the remote wireless communication device (10).

5. The apparatus of claim 1, wherein the sensing parameter information comprises at least one of timing, phase and frequency information, an identification of an algorithm or filter to be used for processing, an application identifier, and a sensing signal identifier of the received sensing signal.

6. The apparatus of claim 1, further comprising a signal generator (202) for generating based on the sensing parameter information included in the received communication signal an internal synthetic sensing signal, wherein the analysis system (209) is configured to combine the synthetic sensing signal with the received sensing signal.

7. The apparatus of claim 6, wherein the signal generator (202) is configured to use a discrete Fourier transform spread orthogonal frequency division multiplexing signal generation process of the wireless communication unit (201) to generate a chirp signal as the internal synthetic sensing signal matching the received sensing parameter information.

8. The apparatus of claim 6, wherein the analysis system (209) is configured to generate an intermediate frequency signal by combining the internal synthetic sensing signal with the received sensing signal, to perform filtering and analogue-to-digital conversion of the intermediate frequency signal to obtain a digital intermediate frequency signal, and to process the digital intermediate frequency signal to yield application-specific position, movement or structure data or to transmit the digital intermediate frequency signal to the remote wireless communication device (10) or a network function/device or a cloud to perform further application-specific processing.

9. The apparatus of claim 1, wherein the apparatus is configured to provide a time delay measurement functionality by using the wireless communication unit (201) to perform a two-way time delay measurement in cooperation with the remote wireless communication device (10).

10. The apparatus of claim 1, further comprising at least one movement sensor (208) for measuring movements and/or vibrations of the wireless communication device (20).

11. The apparatus of claim 1, further comprising a lower-resolution non-distributed analysis system (207) for providing a non-distributed location scanning capability.

12. The apparatus of claim 8, wherein the analysis system (209) is configured to detect a location and/or movement of the target object (150) based on an isolated surface derived from a constant line detected in the digital intermediate frequency signal, orto detect a heart rate and breathing rate based on isolated and unwrapped phase data of a selected surface derived from a constant line detected in the digital intermediate frequency signal, or to measure a skin conductivity based on an estimation of a total reflectivity of a selected surface derived from a constant line detected in the digital intermediate frequency signal.

13. The apparatus of claim 1, wherein the analysis system (209) is configured to detect a unique spatial location of a surface of the target object (150) by finding intersections of equal-distance return ellipses (91, 92) or circles (93) of receiver devices of the sensing signal and constraining the position by a direction angle and beam spread angle of a transmitter beam of the remote wireless communication device (10).

14. A system comprising at least one wireless communication device (20) comprising an apparatus as claimed in claim 1 and at least one remote wireless communication device (10) for transmitting the received sensing signal.

15. A method for providing sensing capability in a wireless communication device (20), the method comprising:
receiving a communication signal from a remote device (10) at another communication end;
detecting a sensing signal at the output of a radio frequency reception frontend (204) based on sensing parameter information included in the received communication signal;
performing based on the received sensing signal and the sensing parameter information included in the received communication signal at least one of:
determining a timing, phase shift, frequency, amplitude or signal deformation of the sensing signal to further determine if the sensing signal is reflected by a target object (150) or is sent via a direct non-reflected path;
generating a filtered signal to transmit to a further processing unit to extract sensing information about a target object (150); and
determining a position, a movement or a structure of a target object (150).
